# EUROPÄISCHE PATENTSCHRIFT

(11) **EP 1 382 249 B1**
(45) Veröffentlichungstag und Bekanntmachung des Hinweises auf die Patenterteilung: **30.07.2008**
(21) Anmeldenummer: 02027544.2
(22) Anmeldetag: 09.12.2002
(51) Int. Cl.: A21B 3/07

(54) **Backofen mit Backwagen-Fördersystem**
Baking oven and oven cart conveying system
Four de cuisson et système de transport de chariots de four

(30) Priorität: 19.07.2002 DE 10232998
(43) Veröffentlichungstag der Anmeldung: 21.01.2004
(73) Patentinhaber: Heuft Besitzgesellschaft GmbH & Co. KG, 56745 Bell/Eifel (DE)
(72) Erfinder: Heuft, Thomas, 56072 Koblenz (DE); Schneider, Guenther, 56745 Bell (DE); Sesterhenn, Jürgen, 56736 Kottenheim (DE)
(74) Vertreter: Hess, Peter K. G.

(56) Entgegenhaltungen:
- EP-A- 0 587 015
- CH-A- 669 167
- DE-A- 2 756 143
- DE-A- 19 539 856
- FR-A- 2 682 855
- US-A- 1 567 023
- US-A- 3 465 690
- US-A- 4 039 278
- US-A- 4 259 002
- US-A- 4 442 935
- US-A- 4 718 349

## Beschreibung

### 1. Technisches Gebiet

Die vorliegende Erfindung betrifft einen Backofen zum Backen von Backwaren, insbesondere einen Backofen für Bäckereien, der mit Backwagen beschickbar ist.

### 2. Stand der Technik

Im Stand der Technik werden Backöfen, die mit Backwagen beschickt werden, als Wagenofen bezeichnet. Grundsätzlich sind zwei verschiedene Arten von Wagenöfen bekannt. Zum einen gibt es sogenannte Stikkenöfen (z.B. gemäß DE-A-2756143) in denen die Backwaren durch zirkulierende Heißluft gebacken werden. Solche Wagenöfen backen hauptsächlich nach dem Konvektionsprinzip. Zum anderen sind sogenannte Radiatoren-Wagenöfen bekannt, bei denen plattenförmige Heizelemente - sogenannte Radiatoren - in den Backraum ragen. Solche Backöfen backen hauptsächlich durch Wärmestrahlung.

Die angesprochenen Radiatoren-Wagenöfen backen die Backwaren durch in den Backraum hineinragende Radiatoren. Diese Radiatoren werden entweder mit heißem Wasserdampf, Heizgasen oder Thermoöl beheizt. Falls Thermoöl als Wärmeträger benutzt wird, wird dieses üblicherweise mittels eines extern angeordneten öl- oder gasbetriebenen Heizaggregats aufgeheizt und durch ein geschlossenes Rohrsystem gepumpt. Die öldurchflossen Radiatoren erhitzen den Backraum und geben die Wärme an die Backwaren weiter.

Die Radiatoren ragen horizontal in den Backraum hinein und definieren dadurch einzelne Backetagen eines Radiatoren-Wagenofens. Beim Einschieben eines Backwagens wird über jeden Radiator ein Backblech oder mehrere Backformen geschoben. Dadurch überträgt sich die Wärme dieses Radiators per Wärmestrahlung auf das Backblech oder die Backformen und die darauf oder darin befindlichen Backwaren. Gleichzeitig wird über den jeweils über den Backwaren angeordneten Radiator die Wärme auf die darunter befindlichen Backwaren übertragen. Durch den somit sehr guten Wärmeübergang zwischen den Radiatoren und den Backwaren kann die Backraumtemperatur verhältnismäßig niedrig gehalten werden. Dies wirkt sich vorteilhaft auf die Qualität der Backwaren aus. Weiterhin wird mit einem Radiatoren-Wagenofen ein geringerer Energieverbrauch, verglichen mit konvektiven Backöfen, erzielt. Die hohe Wärmekapazität eines Radiatoren-Wagenofens erlaubt zudem einen hohen Durchsatz, da er nach der Entnahme der fertiggebackenen Backwaren nicht so schnell auskühlt wie ein konvektiver Wagenofen.

Der Backraum eines solchen Wagenofens nach dem Stand der Technik ist so ausgelegt, dass die Backwaren auf einem oder zwei Backwagen gleichzeitig gebakken werden können.

Bei beiden Backofentypen befinden sich die zu backenden Backwaren auf Backblechen und in Backformen, die etagenförmig auf einem rollbaren Backwagen angeordnet sind. Zum Backen der Backwaren werden zunächst die Teigrohlinge auf die einzelnen Backbleche oder in die Backformen gelegt. Diese Backbleche werden dann in den Backwagen eingeschoben. Gegebenenfalls werden die Backformen auf den Backblechen angeordnet. Der Backwagen wird dann zum eigentlichen Backen der Backwaren von Hand in den Backraum des Wagenofens eingeschoben. Nach dem Schließen der Backraumtür wird das Backprogramm gestartet. Der Backvorgang läuft nun programmgesteuert ab. Nach dessen Beendigung kann zur Entnahme der fertigen Backwaren die Backraumtür geöffnet, und der oder die Backwagen können von Hand aus dem Wagenofen gezogen werden. Die Backwaren verbleiben zum Abkühlen üblicherweise auf dem Backwagen.

Die beladenen Backwagen können jeweils ein Gewicht aufweisen, das über 200kg betragen kann. Daher erfordert das Einschieben der Backwagen in den Backraum einen gewissen Kraftaufwand. Zudem müssen die Backwagen in einen Radiatoren-Wagenofen möglichst parallel eingeschoben werden, um den Backwagen nicht mit den in den Backraum hineinragenden Radiatoren zu verkanten. Erschwerend kommt hinzu, dass natürlich der Backraum und die Radiatoren heiß sind, so dass für den Bediener eine Verbrennungsgefahr beim Einschieben der Backwagen gegeben ist.

Beim Herausziehen der Backwagen nach dem Backen sind diese ebenfalls heiß geworden, so dass auch an ihnen Verbrennungsgefahr gegeben ist. Zum Einschieben und Herausziehen der Backwagen benutzt der Bediener daher Haken und Handschuhe. Die Handschuhe und Haken erschweren die Handhabung der Backwagen, besonders beim Herausziehen der Backwagen.

Bei einem Radiatoren-Wagenofen, der für zwei Backwagen ausgelegt ist, kann der hintere Wagen nicht ohne weiteres aus dem Backraum gezogen werden. Die in den Backraum hineinragenden Radiatoren verhindern, dass der Bediener den hinteren Backwagen gefahrlos greifen kann. Er kann nur dann herausgezogen werden, wenn er an den vorderen Wagen angekuppelt wird und dann beide Backwagen zusammen herausgezogen werden. Somit muss das Gewicht zweier beladener Backwagen bewegt werden, das über 400kg betragen kann. Dieses Gewicht kann oft nur durch eine ruckartige, rückenschädliche Bewegung des Bedieners in Bewegung versetzt werden. Liegen Krümel unter den Rollen der Backwagen, muss noch mehr Kraft aufgewendet werden, die Backwagen zu bewegen.

Somit ergibt sich aus dem Stand der Technik das der vorliegenden Erfindung zugrundeliegende technische Problem, einen Wagenofen bereitzustellen, der ein vereinfachtes Beschicken und Entnehmen der Backwagen aus dem Backraum ermöglicht.

### 3. Zusammenfassung der Erfindung

Die vorliegende Erfindung löst dieses Problem durch einen Wagenofen gemäß Patentanspruch 1. Das Einbringen und Herausbefördern der Backwagen ist somit für den Bediener gefahrlos möglich. Zudem wird er von dem körperlich sehr beanspruchenden Einbringen und Herausziehen der Backwagen entlastet.

In einer ersten bevorzugten Ausführungsform des Wagenofens ist die Backwagen-Fördereinrichtung im Bereich des Bodens des Backraums angeordnet. Die Backwagen werden somit bevorzugt im Bereich ihrer Rollen von der Backwagen-Fördereinrichtung ergriffen und von ihr in den Backraum eingebracht oder aus dem Backraum herausbefördert.

In einer weiteren bevorzugten Ausführungsform des Wagenofens weist die Backwagen-Fördereinrichtung zum Ergreifen und Bewegen der Backwagen mindestens eine Förderkette auf.

In einer weiteren bevorzugten Ausführungsform des Wagenofens ergreift und bewegt die Backwagen-Fördereinrichtung die Backwagen über Reibschluss. Dadurch werden die Backwagen einerseits sicher bewegt und andererseits bei Störungen oder Überlastungen sicher von der Backwagen-Fördereinrichtung entkoppelt.

In einer weiteren bevorzugten Ausführungsform des Wagenofens weisen die Backwagen Gleitschienen auf, die von der Förderkette per Reibschluss ergriffen werden können.

In einer weitere bevorzugten Ausführungsform des Wagenofens wird die Backwagen-Fördereinrichtung elektrisch angetrieben. Bevorzugt wird die Backwagen-Fördereinrichtung über eine Antriebskette angetrieben. Besonders bevorzugt läuft diese Antriebskette in einem Kettenkasten, der den Backraum gegenüber der Umwelt abdichtet. Dadurch wird ein Luftaustausch zwischen Backraum und Umwelt verhindert, so dass die Backbedingungen konstant bleiben.

In einer weiteren bevorzugten Ausführungsform des Wagenofens ist die Backwagen-Fördereinrichtung modular aufgebaut und zu Reinigungs- oder Wartungszwecken aus dem Backraum entfernbar. Dadurch kann der Backraum und die Backwagen-Fördereinrichtung leicht gereinigt oder erneuert werden.

In einer weiteren bevorzugten Ausführungsform des Wagenofens wird die Backwagen-Fördereinrichtung durch einen Elektromotor angetrieben, der durch eine Steuerung gesteuert wird. Bevorzugt wird der Elektromotor für eine vordefinierte Zeitspanne, oder in Abhängigkeit vom Bediener manuell gegebenen Signalen betrieben. Besonders bevorzugt ist die Zeitspanne, in der der Elektromotor betrieben wird, variabel einstellbar. Somit kann der Bediener die Backwagen auf Knopfdruck in den Backraum einbringen oder herausbefördern.

In einer weiteren bevorzugten Ausführungsform des Wagenofens ist die Backwagen-Fördereinrichtung hitzebeständig und korrosionsbeständig ausgelegt.

### 4. Kurze Beschreibung der Zeichnung

Im Folgenden werden die bevorzugten Ausführungsformen der vorliegenden Erfindung unter Bezugnahme auf die Zeichnung beschrieben. Darin zeigt:
- Fig. 1: eine vertikale Querschnittsansicht des prinzipiellen Aufbaus eines Radiatoren-Wagenofens mit Thermoöl durchflossenen Radiatoren;
- Fig. 2: eine vertikale Querschnittsansicht des unteren Teils eines erfindungsgemäßen Radiatoren-Wagenofens;
- Fig. 3: eine vertikale Querschnittsansicht des unteren Teils eines erfindungsgemäßen Radiatoren-Wagenofens mit Backwagen-Fördereinrichtung im Betrieb;
- Fig. 4: eine perspektivische Ansicht einer Fördereinheit einer Backwagen-Fördereinrichtung;
- Fig. 5: eine vertikale Querschnittsansicht einer Antriebseinheit einer Backwagen-Fördereinrichtung;
- Fig. 6: eine vertikale Querschnittsansicht einer Förderschiene einer Fördereinheit;
- Fig. 7: eine vertikale Querschnittsansicht einer weiteren Förderschiene einer Fördereinheit;
- Fig. 8: eine vertikale Querschnittsansicht einer Förderschiene einer Fördereinheit im Bereich der Antriebswelle.

### 5. Detaillierte Beschreibung der bevorzugten Ausführungsformen

Bevorzugte Ausführungsformen des erfindungsgemäßen Wagenofens werden im Folgenden mit Hilfe der Figuren erläutert.

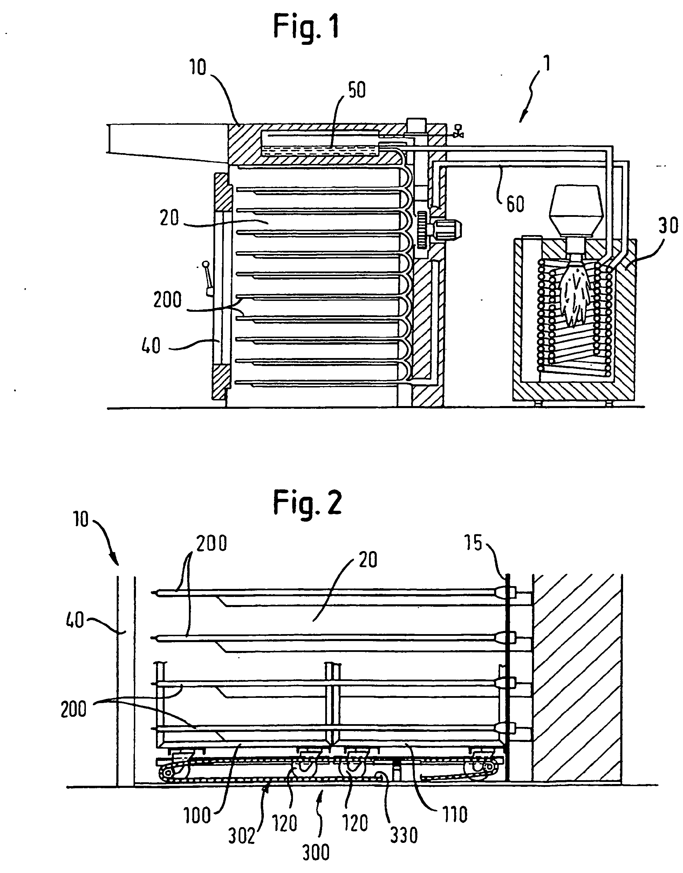

In Fig. 1 ist ein Backofensystem 1 dargestellt, in dem eine Backwagen-Fördereinrichtung eingesetzt werden kann. Das Backofensystem 1 besteht aus einem Wagenofen 10 und einem Heizaggregat 30, das Thermoöl 50 aulheizt. Der Wagenofen 10 ist als Radiatoren-Wagenofen ausgeführt. In den Backraum 20 des Wagenofens 10 ragen beheizbare horizontale Radiatoren 200, die an einen Thermoölkreislauf 60 angeschlossen sind und von Thermoöl 50 durchflossen werden. An seiner Vorderseite ist der Backraum 20 mittels einer Backraumtür 40 verschlossen.

In Fig. 2 ist eine Querschnittsansicht des unteren Teils des Wagenofens 10 dargestellt. Wie gezeigt sind in den Backraum 20 zwei Backwagen 100, 110 eingebracht, von denen in Fig. 2 nur der untere Teil dargestellt ist. Die Backwagen 100, 110 weisen drehbare und lenkbare Rollen 120 auf, mit denen sich die Backwagen 100, 110 frei bewegen lassen. Obwohl in Fig. 2 nur zwei Backwagen 100, 110 dargestellt sind, lässt sich die Erfindung ohne weiteres auch auf einen Wagenofen 10 übertragen, der mehr als zwei Backwagen 100, 110 in seinem Backraum 20 aufnehmen kann.

Weiterhin zeigt Fig. 2 die unteren vier Radiatoren 200 eines Wagenofens 10 aus Fig. 1. Die Radiatoren 200 sind im Bereich der Rückwand 15 des Wagenofens 10 befestigt und ragen freitragend in den Backraum 20 hinein. Radiatoren 200 und Backwagen 100, 110 sind so aufeinander abgestimmt, dass bei in den Backraum 20 eingeschobenen Backwagen 100, 110 sich über jedem Radiator 200 Backbleche oder Backformen befinden können.

Im unteren Bereich des Backraums 20 ist eine Backwagen-Fördereinrichtung 300 angeordnet. In Fig. 2 ist die Fördereinheit 302 der Backwagen-Fördereinrichtung dargestellt. In einer ersten bevorzugten Ausführungsform ist die Backwagen-Fördereinrichtung 300 mit einer Förderkette 330 ausgestattet, auf die die Backwagen 100, 110 auffahren können und bewegt werden.

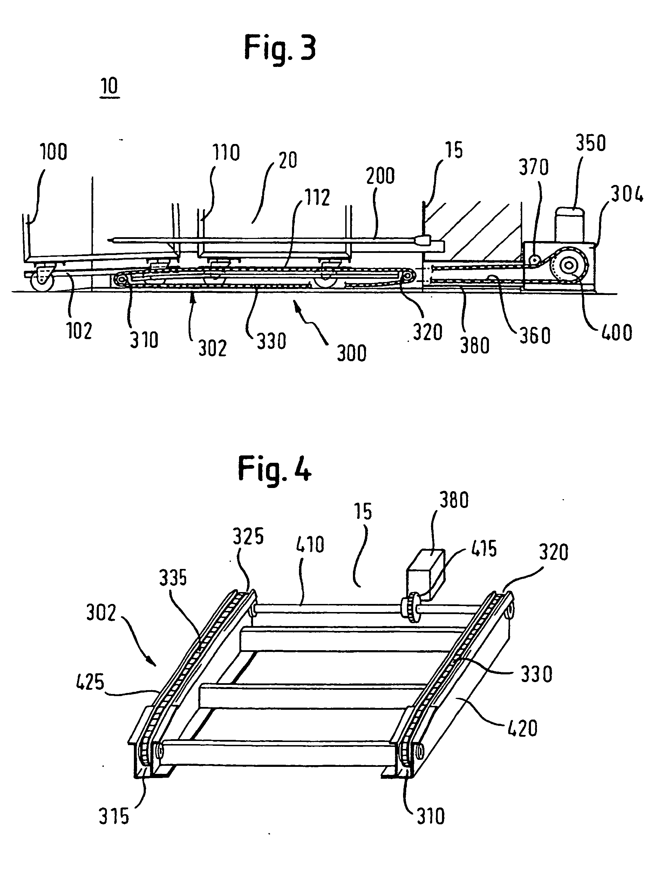

In Fig. 3 ist die gesamte Backwagen-Fördereinrichtung 300 dargestellt, die die Fördereinheit 302 und eine Antriebseinheit 304 aufweist. Fig. 3 zeigt die Backwagen-Fördereinrichtung 300 im Betrieb. Sie zeigt einen Backwagen 110, der sich ungefähr in der Mitte des Backraums 20 des Wagenofens 10 befindet, sowie einen Backwagen 100, der sich noch im Bereich der geöffneten Backraumtür 40 befindet. Der Backwagen 100 wird gerade von der Fördereinheit 302 der Backwagen-Fördereinrichtung 300 ergriffen und in den Backraum 20 hineinbewegt.

Mit Bezug auf die Fig. 3 und 4 besteht die Fördereinheit 302 der Backwagen-Fördereinrichtung 300 aus einer rechten Förderschiene 420 und einer symmetrisch dazu aufgebauten linken Förderschiene 425. Jede der oben offenen Förderschienen 420, 425 umfasst eine Förderkette 330, 335 sowie ein vorderes Umlenk-Kettenritzel 310, 315 und ein hinteres Antriebs-Kettenritzel 320, 325, die die Förderkette an den Enden der Förderschienen 420, 425 umlenken. Die hinteren Antriebs-Kettenritzel 320, 325 sind mit einer Antriebswelle 410 verbunden, die außerdem ein weiteres, mittleres Antriebsritzel 415 aufweist. Über die Antriebswelle 410 und die hinteren Antriebs-Kettenritzel 320, 325 werden die beiden Förderketten 330, 335 angetrieben.

Die Antriebswelle 410 wird über das mittlere Antriebsritzel 415 mittels einer Antriebskette 360 angetrieben. Die Antriebskette 360 ist Teil einer Antriebseinheit 304, die weiterhin einen Antriebsmotor 350 aufweist. Der Antriebsmotor 350 treibt über ein Getriebe 390 ein Antriebs-Kettenrad 400, über das die Antriebskette 360 bewegt wird. Eine Spannrolle 370 spannt die Antriebskette 360. Die Antriebskette 360, das Antriebs-Kettenrad 400 und die Spannrolle 370 befinden sich in einem Kettenkasten 380, der an seinem vorderen Ende bündig mit der hinteren Wand 15 des Backraums 20 abschließt. Der Raum innerhalb des Kettenkastens 380 ist somit mit dem Backraum 20 verbunden und dichtet diesen gegenüber der Umwelt ab. Dadurch wird ein Luftaustausch zwischen Backraum 20 und Umwelt aufgrund der Öffnung in der Rückwand 20 für die Antriebskette 360 verhindert. Die Wärme innerhalb des Backraums 20 entweicht nicht ungewollt, so dass die Backbedingungen nicht nachteilig beeinflusst werden.

Vorzugsweise sind die Backwagen 100, 110 an ihrer Unterseite zwischen den drehbaren Rollen mit Gleitschienen 102, 112 ausgestattet. Diese Gleitschienen 102, 112 erstrecken sich über die gesamte Länge des Backwagens 100, 110 und dienen der Aufnahme der Förderketten 330, 335. Die Ausführungsform der Gleitschienen 102, 112 wird so gewählt, dass die Backwagen 100, 110 sicher von den Förderketten 330, 335 ergriffen und bewegt werden, dass aber bei einem Verkanten der Backwagen 100, 110 oder wenn sich einer der Backwagen 100, 110 bereits in der hintersten Position befindet, die Förderketten 330, 335 gefahrlos unter den Gleitschienen 102, 112 durchrutschen können. Somit werden Beschädigungen an den Radiatoren 200, der Auskleidung des Backraums 20 und den Backwagen 100, 110 vermieden.

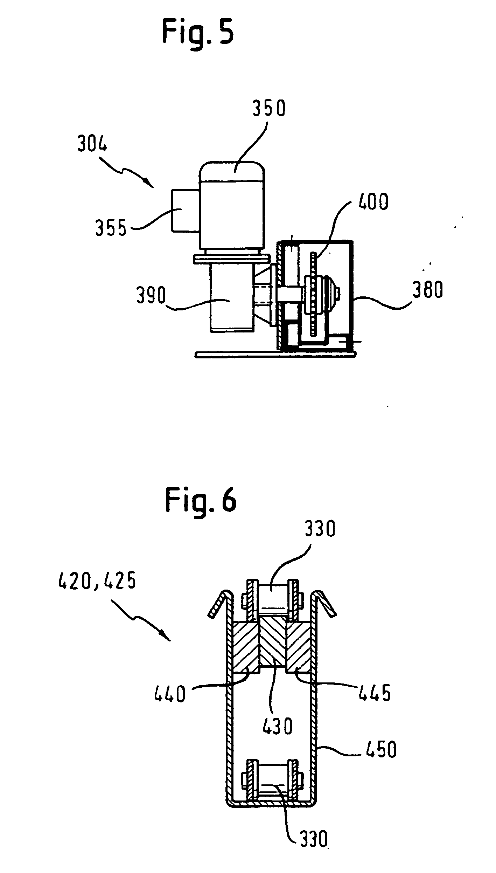

Fig. 5 zeigt eine vertikale Querschnittsansicht der Antriebseinheit 304. Der Antriebsmotor 350 ist in dieser Ausführungsform senkrecht angeordnet und über ein Winkelgetriebe 390 mit dem Antriebs-Kettenrad 400 verbunden. Fig. 5 zeigt weiterhin den Kettenkasten 380, der Antriebs-Kettenrad 400, Spannrolle 370 und Antriebskette 360 gegenüber der Umwelt abdichtet.

Weiterhin ist bevorzugt eine Steuerung 355 vorgesehen, die den Elektromotor 350 zeitabhängig oder durch vom Bediener gegebene Signale steuert.

Ein Einbringen der Backwagen 100, 110 läuft bevorzugt wie folgt ab: Nach dem Öffnen der Backraumtür 40 setzt der Bediener die Backwagen-Fördereinrichtung beispielsweise durch Drücken eines Knopfes (nicht dargestellt) in Gang. Dadurch treibt der Elektromotor 350 die Backwagen-Fördereinrichtung 300 mit einer ersten Drehrichtung so an, dass sich der obere Bereich der Förderketten 330, 335 in Richtung der Rückwand 15 des Backraums bewegt. Wenn nun einer der beiden Backwagen 100, 110 vom Bediener auf den vorderen, vorzugsweise leicht abgeschrägten Bereich der Förderschienen 420, 425 geschoben wird, wird er von den Förderketten 330, 335 ergriffen und in das Innere des Backraums 20 bewegt. Ist der Backwagen 100, 110 am hinteren Ende des Backraums 20 angelangt, steht er an der Rückwand 15 an. Wenn die Backwagen-Fördereinrichtung 300 noch in Betrieb ist, rutschen die Förderketten 330, 335 unter den Gleitschienen 102, 112 der Backwagen 100, 110 durch.

Sind die Backwagen 100, 110 in den Backraum 20 des Wagenofens 10 eingebracht, kann die Backwagen-Fördereinrichtung 300 angehalten werden. Dies geschieht entweder durch das Betätigen eines Ein-Aus-Schalters durch den Bediener oder automatisch nach Ablauf einer gewissen Zeit. In diesem Fall richtet sich die Zeitdauer nach der Zeit, die benötigt wird, um zwei Backwagen in den Wagenofen 10 einzubringen. Vorzugsweise kann die Zeitdauer variabel einstellbar sein, um auf die individuellen Gegebenheiten oder Vorlieben der Bediener angepasst zu werden. Weiterhin könnte die Backwagen-Fördereinrichtung 300 über einen Taster gesteuert werden, wobei die Backwagen-Fördereinrichtung 300 betrieben wird, solange der Taster vom Bediener gedrückt wird. Vorzugsweise ist ein Taster oder Schalter zum Einbringen der Backwagen 100, 110 und ein Taster oder Schalter zum Ausfahren der Backwagen 100, 110 vorgesehen. Alternativ kann sich die Bewegungsrichtung der Förderketten 330, 335 auch nach jedem Betätigen eines Tasters oder Schalters automatisch umkehren.

Das Herausbefördern der Backwagen 100, 110 läuft analog zum Einbringen ab. Hierbei kann die Zeitdauer so gewählt werden, dass entweder beide Backwagen 100, 110 oder nur der vordere der Backwagen 100, 110 aus dem Backraum 20 befördert wird. Haben die Backwagen 100, 110 den Backraum verlassen, können sie vom Bediener auch mit Handschuhen sicher und bequem gegriffen werden und samt den fertigen Backwaren zum Abkühlen an einen gewünschten Ort geschoben werden.

Fig. 6 zeigt eine vertikale Querschnittsansicht einer rechten oder linken Förderschiene 420, 425. Hier ist dargestellt, wie die Kette 330 in der Förderschiene geführt wird. In dieser Ausführungsform wird die Kette 330 durch ein Führungsprofil 430 geführt, das nach oben versetzt zwischen zwei weiteren Profilen 440, 445 mittig im oberen Bereich eines Förderschienenkörpers 450 angeordnet ist. Die Profile 430, 440, 445 weisen vorzugsweise einen rechteckigen Querschnitt auf und sind aus einem hitzebeständigen Material gefertigt. Zur Verringerung der Reibung und der Minimierung von Geräuschen wird für die Profile 430, 440, 445 vorzugsweise ein hitzebeständiger Kunststoff oder Messing verwendet. Der Förderschienenkörper 450 wird vorzugsweise aus einem Blechmaterial gefertigt. Zur Vermeidung von Korrosion sind alle Metallteile des Ofens 10, der Backwagen 100, 110 und der Backwagen-Fördereinrichtung 300 bevorzugt aus einem Edelstahl vorzugsweise Chrom-Vanadium-Stahl hergestellt.

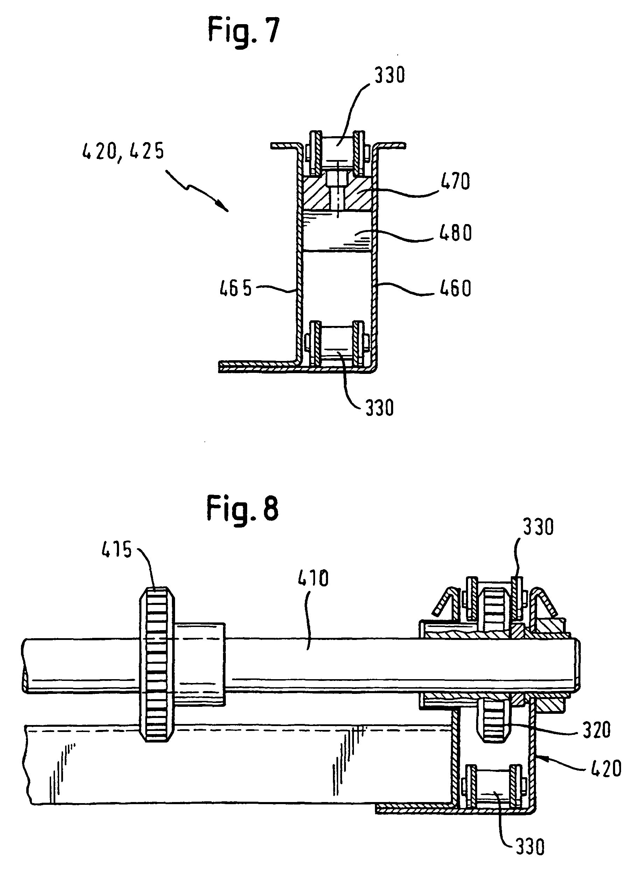

In Fig. 7 wird eine weitere bevorzugte Ausführungsform für eine Förderschiene 420, 425 dargestellt. In dieser Ausführungsform besteht der Förderschienenkörper aus zwei im Wesentlichen L-förmig gebogenen Blechprofilen 460, 465, die zu einem U-Profil zusammengebracht werden. Dadurch lassen sich die Förderschienen 420, 425 zu Wartungs- oder Reinigungszwecken leicht öffnen. Wie in Fig. 7 dargestellt, kann die Kette 330 auch durch ein entsprechend geformtes Führungsprofil 470 mittig in der Förderschiene 420, 425 geführt werden. Auch das Führungsprofil 470 wird vorzugsweise auch einem hitzebeständigen Kunststoff oder Messing gefertigt. Wie in Fig. 7 dargestellt, wird das Führungsprofil 470 bevorzugt von oben an Abstandshaltern 480 befestigt, so dass es im Falle der Abnutzung leicht ausgetauscht werden kann.

Fig. 8 zeigt eine vertikale Querschnittsansicht durch den hinteren Teil der Förderschiene 420. Weiterhin wird die Lagerung der Antriebswelle 410, das mittleres Antriebsritzel 415 und das hintere Antriebsritzel 320 dargestellt.

In einer weiteren bevorzugten Ausführungsform des Wagenofens 10 kann die Backwagen-Fördereinrichtung 300 zu Reinigungs- oder Wartungszwecken aus dem Backraum 20 entfernt werden. Zu diesem Zweck wird der Kettenkasten 380 geöffnet und die Antriebskette 360 mittels der Spannrolle 370 entspannt. Danach lässt sich die Antriebskette 360 vom Antriebs-Kettenrad 400 abnehmen. Wenn nun die Befestigung der Fördereinheit 302 im Backraum 20 gelöst wird, kann die Fördereinheit 302 zusammen mit der Antriebskette 360 nach vorne aus dem Backraum herausgezogen werden. Somit kann die Fördereinheit 302 bequem außerhalb des Backraums 20 gereinigt oder gewartet werden. Die Montage der Backwagen-Fördereinrichtung erfolgt prinzipiell in umgekehrter Reihenfolge.

Bezugszeichenliste
- 1: Backofensystem
- 10: Wagenofen
- 15: Rückwand des Backraums
- 20: Backraum
- 30: Heizaggregat
- 40: Backraumtür
- 50: Thermoöl
- 60: Thermoölkreislauf
- 100: erster Backwagen
- 110: zweiter Backwagen
- 102: Gleitschienen des ersten Backwagens
- 112: Gleitschienen des zweiten Backwagens
- 200: Radiatoren
- 300: Backwagen-Fördereinrichtung
- 302: Fördereinheit
- 304: Antriebseinheit
- 310: rechtes Umlenk-Kettenritzel
- 315: linkes Umlenk-Kettenritzel
- 320: rechtes Antriebs-Kettenritzel
- 325: linkes Antriebs-Kettenritzel
- 330: rechte Förderkette
- 335: linke Förderkette
- 350: Antriebsmotor
- 360: Antriebskette
- 370: Spannrolle
- 380: Kettenkasten
- 390: Getriebe
- 400: Antriebs-Kettenrad
- 410: Antriebswelle
- 415: mittleres Antriebsritzel
- 420: rechte Förderschiene
- 425: linke Förderschiene
- 430: Führungsprofil
- 440: linkes Profil
- 445: rechtes Profil
- 450: Förderschienenkörper
- 460: erste Förderschienenhälfte
- 465: zweite Förderschienehälfte
- 470: Führungsprofil
- 480: Abstandshalter

## Patentansprüche

1. Wagenofen (10), insbesondere zur gewerblichen Anwendung, aufweisend:
a) einen mit einer Backofentür (40) verschließbaren und eine Rückenwand (15) aufweisenden Backraum (20), zur Aufnahme von mindestens einem rollbaren Backwagen (100, 110), **gekennzeichnet durch**
b) eine Backwagen-Fördereinrichtung (300), zum selektiven Ergreifen und Befördern des mindestens einen Backwagens (100, 110) in und aus dem Backraum (20), wobei
c) die Backwagen-Fördereinrichtung (300) eine Antriebseinheit (304) mit einem Antriebsmotor (350) aufweist, welcher mit einer ersten Drehrichtung die Backwagen-Fördereinrichtung (300) so antreibt, dass sie den mindestens einen Backwagen (100, 110) in Richtung der Rückwand (15) in den Backraum (20) hineinbewegt, und wobei
d) der Antriebsmotor (350) mit einer zweiten Drehrichtung die Backwagen-Fördereinrichtung (300) so antreibt, dass sie den mindestens einen Backwagen (100, 110) in entgegengesetzter Richtung wieder aus dem Backraum (20) herausbefördert.

2. Wagenofen (10) nach Anspruch 1, wobei die Backwagen-Fördereinrichtung (300) im Bereich des Bodens des Backraums (20) angeordnet ist.

3. Wagenofen (10) nach einem der Ansprüche 1 oder 2, wobei die Backwagen-Fördereinrichtung (300) mindestens eine Förderkette (330) aufweist, zum Ergreifen und Bewegen der Backwagen (100, 110).

4. Wagenofen (10) nach einem der Ansprüche 1 - 3, wobei die Backwagen-Fördereinrichtung (300) die Backwagen (100, 110) über Reibschluss ergreift und bewegt.

5. Wagenofen (10) nach Anspruch 4, wobei die Backwagen (100, 110) Gleitschienen (102, 112) aufweisen, die von der mindestens einen Förderkette (330) per Reibschluss ergriffen werden können.

6. Wagenofen (10) nach einem der Ansprüche 1 - 5, wobei die Backwagen-Fördereinrichtung (300) elektrisch angetrieben wird.

7. Wagenofen (10) nach einem der Ansprüche 1 - 6, wobei die Backwagen-Fördereinrichtung (300) über eine Antriebskette (340) angetrieben wird.

8. Wagenofen (10) nach Anspruch 7, wobei die Antriebskette (340) in einem Kettenkasten (380) läuft, der den Backraum (20) gegenüber der Umwelt abdichtet.

9. Wagenofen (10) nach einem der Ansprüche 1 - 8, wobei die Backwagen-Fördereinrichtung (300) modular aufgebaut ist und zu Reinigungs- oder Wartungszwecken aus dem Backraum (20) entfernbar ist.

10. Wagenofen (10) nach einem der Ansprüche 1 - 9, wobei der Antriebsmotor (350) ein Elektromotor (350) ist, der durch eine Steuerung (355) gesteuert wird.

11. Wagenofen (10) nach Anspruch 10, wobei der Elektromotor (350) für eine vordefinierte Zeitspanne, oder in Abhängigkeit vom Bediener manuell gegebenen Signalen betrieben wird.

12. Wagenofen (10) nach Anspruch 11, wobei die Zeitspanne, in der der Elektromotor (350) betrieben wird, variabel einstellbar ist.

13. Wagenofen (10) nach einem der Ansprüche 1 - 12, wobei die Backwagen-Fördereinrichtung (300) hitzebeständig ausgelegt ist.

## Claims

1. Cart baking oven (10), particularly for commercial use, comprising:
a) a baking space (20) closable by a baking oven door (40) and comprising a back wall (15), for receiving of at least a rollable baking cart (100, 110), **characterized by**
b) an oven cart conveying device (300), for selectively engaging and moving the at least one oven cart (100, 110) into and out of the baking space (20), wherein
c) the oven cart conveying device (300) comprises a driving unit (304) with a driving motor (350), which during a first rotational direction drives the oven cart conveying device (300) such that it moves the at least one oven cart (100, 110) in direction of the back wall (15) into the baking space (20), and wherein
d) the driving motor (350) during of a second rotational direction drives the oven cart conveying device (300) such that it moves the at least one oven cart (100, 110) in opposite direction out of the baking space (20).

2. Cart baking oven (10) according claim 1, wherein the oven cart conveying device (300) is arranged in the area of the floor of the baking space (20).

3. Cart baking oven (10) according to one of the claims 1 or 2, wherein the oven cart conveying device (300) comprises at least one conveying chain (330), for engaging and moving the oven carts (100, 110).

4. Cart baking oven (10) according to one of the claims 1 to 3, wherein the oven cart conveying device (300) engages and moves the oven carts (100, 100) by means of frictional engagement.

5. Cart baking oven (10) according claim 4, wherein the oven carts (100, 110) comprise sliding tracks (102, 112), which can be engaged by the at least one conveying chain (330) by means of frictional engagement.

6. Cart baking oven (10) according to one of the claims 1 to 5, wherein the oven cart conveying device (300) is driven electrically.

7. Cart baking oven (10) according to one of the claims 1 to 6, wherein the oven cart conveying device (300) is driven via a driving chain (340).

8. Cart baking oven (10) according claim 7, wherein the driving chain (340) runs within a chain housing (380), which isolates the baking space (20) with respect to the environment.

9. Cart baking oven (10) according to one claims 1 to 8, wherein the oven cart conveying device (300) is modularly designed and is removable from the baking space (20) for cleaning or servicing purposes.

10. Cart baking oven (10) according to one of the claims 1 to 9, wherein the driving motor (350) is an electric motor (350) which is controlled by a controller (355).

11. Cart baking oven (10) according to claim 10, wherein the electric motor (350) is driven for a predetermined period of time or driven dependent from signals manually given by the user.

12. Cart baking oven (10) according to claim 11, wherein the time period in which the electric motor (350) is driven is variably adjustable.

13. Cart baking oven (10) according to one of the claims 1 to 12, wherein the oven cart conveying device (300) is designed temperature resistant.

## Revendications

1. Four à chariot (10), en particulier pour utilisation industrielle, comprenant :
a) un espace de cuisson (20) refermable par une porte de four (40) et présentant une paroi arrière (15), qui est destiné à recevoir au moins un chariot de cuisson (100, 110) roulant, **caractérisé par**
b) un dispositif de transport de chariot (300) pour la saisie et le transport sélectifs dudit au moins un chariot de cuisson (100, 110) jusque dans l'espace de cuisson (20) et hors de celui-ci,
dans lequel
c) le dispositif de transport de chariot (300) comprend une unité d'entraînement (304) pourvue d'un moteur d'entraînement (350) qui, dans un premier sens de rotation, entraîne le dispositif de transport de chariot (300) de telle sorte qu'il déplace ledit au moins un chariot de cuisson (100, 110) en direction de la paroi arrière (15) jusque dans l'espace de cuisson (20),
d) le moteur d'entraînement (350), dans un second sens de rotation, entraîne le dispositif de transport de chariot (300) de telle sorte qu'il transporte ledit au moins un chariot de cuisson (100, 110) dans la direction opposée hors de l'espace de cuisson (20).

2. Four à chariot (10) selon la revendication 1, dans lequel le dispositif de transport de chariot (300) est agencé au niveau du fond de l'espace de cuisson (20).

3. Four à chariot (10) selon l'une des revendications 1 ou 2, dans lequel le dispositif de transport de chariot (300) comprend au moins une chaîne de transport (330) pour saisir et déplacer les chariots de cuisson (100, 110).

4. Four à chariot (10) selon l'une des revendications 1 à 3, dans lequel le dispositif de transport de chariot (300) saisit et déplace les chariots de cuisson par coopération de friction.

5. Four à chariot (10) selon la revendication 4, dans lequel les chariots de cuisson (100, 110) présentent des glissières (102, 112) qui peuvent être saisies par ladite au moins une chaîne de transport (330) par coopération de friction.

6. Four à chariot (10) selon l'une des revendications 1 à 5, dans lequel le dispositif de transport de chariot (300) est entraîné par voie électrique.

7. Four à chariot (10) selon l'une des revendications 1 à 6, dans lequel le dispositif de transport de chariot (300) est entraîné via une chaîne d'entraînement (340).

8. Four à chariot (10) selon la revendication 7, dans lequel la chaîne d'entraînement (340) tourne dans un caisson à chaîne (380) qui étanche l'espace de cuisson (20) par rapport à l'environnement.

9. Four à chariot (10) selon l'une des revendications 1 à 8, dans lequel le dispositif de transport de chariot (300) est conçu sous forme modulaire et est amovible de l'espace de cuisson (20) à des fins de nettoyage ou d'entretien.

10. Four à chariot (10) selon l'une des revendications 1 à 9, dans lequel le moteur d'entraînement (350) est un moteur électrique (350) qui est commandé par une commande.

11. Four à chariot (10) selon la revendication 10, dans lequel le moteur électrique (350) est mis en service pendant une période temporelle prédéfinie ou en fonction de signaux déterminés manuellement par l'utilisateur.

12. Four à chariot (10) selon la revendication 11, dans lequel la période temporelle pendant laquelle le moteur électrique est mis en service est réglable de façon variable.

13. Four à chariot (10) selon l'une des revendications 1 à 12, dans lequel le dispositif de transport de chariot (300) est conçu de façon résistante à la chaleur.
